# EUROPEAN PATENT SPECIFICATION

(11) **EP 2 120 432 B1**
(45) Date of publication and mention of the grant of the patent: **03.08.2011**
(21) Application number: 09153766.2
(22) Date of filing: 26.02.2009
(51) Int. Cl.: H04M 1/56, H04M 1/57, H04M 1/725, H04M 19/04

(54) **Line indication**
Leitungsanzeige
Indication de ligne

(30) Priority: 12.05.2008 US 52270 P
(43) Date of publication of application: 18.11.2009
(60) Divisional application: 11167612.8
(73) Proprietor: RESEARCH IN MOTION LIMITED, Waterloo, Ontario N2L 3W8 (CA)
(72) Inventor: Marui, Keizo, Waterloo Ontario N2L 5Z5 (CA); Kuhl, Lawrence Edward, Waterloo Ontario N2L 5Z5 (CA)
(74) Representative: Patel, Binesh

(56) References cited:
- EP-A- 1 753 211
- EP-A- 1 976 244
- US-A1- 2005 190 196
- US-A1- 2007 191 060

## Description

The present application relates generally to telephone terminal devices and, in particular, to those telephone terminal devices capable of communication using more than one telephone line. More specifically, the present application relates to improving a manner in which a line is identified.

Communications devices with the ability to consolidate multiple functions into a single device are becoming increasingly popular. For example, such a communications device may be used as a telephone terminal device and as an e-mail message receiving, reviewing, composing and transmitting device. In addition, it is common for an individual to use such a communications device for many distinct aspects of their lives, such as a work aspect and a personal aspect.

A user may wish to use a different telephone line when originating telephone calls to different parties. For example, when originating a telephone call to a work colleague, a user may wish to use a first telephone line, where the first telephone line is dedicated for work use. Advantageously, when the work colleague receives the call on their corresponding communications device, the calling line identification information received by, and displayed on, the communications device of the work colleague is the destination number of the first telephone line of the user. Likewise, when originating a telephone call to a personal friend, the user may wish to use a second telephone line, where the second telephone line is dedicated for personal use. Advantageously, when the friend receives the call on their corresponding communications device, the calling line identification information received by, and displayed on, the communications device of the friend is the destination number of the second telephone line of the user. The use of multiple lines may also be beneficial to the user for purposes of tracking long distance bills and other billing matters.

The feature of multiple telephone lines available from a single telephone terminal device has been well known in the realm of office telephone systems and related private branch exchanges. Of course, the telephone terminal device could be a home phone or a cellular telephone. Where the cellular telephone uses the known Global System for Mobile communications (GSM), the feature of multiple telephone lines available from a single telephone terminal device is commonly known as "Alternate Line Service" or "ALS". Where the cellular telephone uses a mobile communication system that employs the known Code division multiple access (CDMA) channel access method, the feature of multiple telephone lines available from a single telephone terminal device is commonly known as Dual-NAM, or multi-NAM, where NAM refers to Number Assignment Module. Some multiple-line devices are further enabled to have an Enterprise line.

[0004a] US2007/191060 discloses a method for distinguishing selected line information among multi line information providing alternate line service. A SIM stores the selected line information, and when the SIM is inserted in a mobile equipment the selected line information is acquired and executed. The line on which an incoming call is received may be displayed on a screen of the mobile equipment.

[0004b] EP1976244 discloses a method for providing a user interface for providing a user interface for managing calls received at a mobile device. The user interface provides an incoming call screen to the user, where the incoming call screen comprises a caller identification data field for displaying data associated with incoming calls and at least one key label field in which labels for mobile device keys (e.g. send and end keys) are displayed.

[0004c] US2005/190196 discloses a method for using a color scheme to communicate information associated with an event and related to integration of software and hardware. A hardware element is illuminated based on a color scheme associated with a corresponding software element.

[0004d] EP1753211 discloses a device displaying images in respect of first stored files which, in response to operation of a user input apparatus to indicate one of the first files, switches to display an image in respect of a second file in association with the selected first file.

### GENERAL

To augment subtle indications of the line on which an incoming call is being received on an alternate line service capable telephone terminal device, an incoming call screen can be made more obviously line-specific by selecting an appropriate background color, pattern, image or combination thereof. An active call screen can also be made more obviously line-specific by selecting an appropriate background.

In accordance with an aspect of the present application there is provided a method of indicating an in-use line in a telephone terminal device capable of communicating on a plurality of lines, said method comprising: receiving an indication of an incoming call on a first line; determining an identity of said first line; selecting, based on said identity of said first line, a background for an incoming call screen; generating, using said background, said incoming call screen such that said incoming call screen is specific to said first line and showing said incoming call screen specific to said first line on a display of said telephone terminal device. In other aspects of the present application, a telephone terminal device is provided for carrying out this method and a computer readable medium is provided for adapting a processor in a telephone terminal device to carry out this method.

Other aspects and features of the present disclosure will become apparent to those of ordinary skill in the art upon review of the following description of specific embodiments of the disclosure in conjunction with the accompanying figures.

### BRIEF DESCRIPTION OF THE DRAWINGS

Reference will now be made to the drawings, which show by way of example, embodiments of the disclosure, and in which:

FIG. 1 illustrates, in block diagram form, a mobile communications device incorporating a line selection mechanism;

FIG. 2 illustrates an example incoming call (line 1) screen;

FIG. 3 illustrates an example incoming call (line 2) screen;

FIG. 4 illustrates an example active call (line 1) screen;

FIG. 5 illustrates an example active call (line 2) screen;

FIG. 6 illustrates steps in an example method of indicating which of multiple lines is being used to receive an incoming call in accordance with an embodiment;

FIG. 7 illustrates an example backgrounded incoming call (line 1) screen in accordance with an embodiment;

FIG. 8 illustrates an example backgrounded incoming call (line 2) screen in accordance with an embodiment;

FIG. 9 illustrates steps in an example method of indicating which of multiple lines is in use for an active call in accordance with an embodiment;

FIG. 10 illustrates an example backgrounded active call (line 1) screen 1000 in accordance with an embodiment; and

FIG. 11 illustrates an example backgrounded active call (line 2) screen 1100 in accordance with an embodiment.

### DESCRIPTION OF PREFERRED EMBODIMENTS

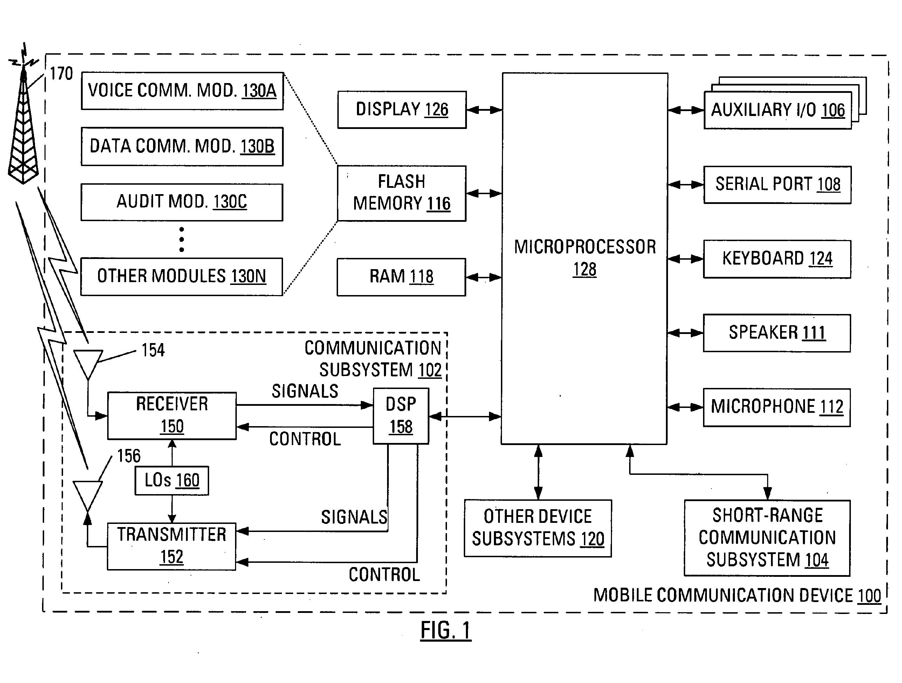

FIG. 1 illustrates a mobile communication device 100 including a housing, an input device (e.g., a keyboard 124 having a plurality of keys) and an output device (e.g., a display 126), which may be a full graphic, or full color, Liquid Crystal Display (LCD). In some embodiments, the display 126 may comprise a touchscreen display. In such embodiments, the keyboard 124 may comprise a virtual keyboard. Other types of output devices may alternatively be utilized. A processing device (a microprocessor 128) is shown schematically in FIG. 1 as coupled between the keyboard 124 and the display 126. The microprocessor 128 controls the operation of the display 126, as well as the overall operation of the mobile communication device 100, in part, responsive to actuation of the keys on the keyboard 124 by a user.

The housing may be elongated vertically, or may take on other sizes and shapes (including clamshell housing structures). Where the keyboard 124 includes keys that are associated with at least one alphabetic character and at least one numeric character, the keyboard 124 may include a mode selection key, or other hardware or software, for switching between alphabetic entry and numeric entry.

In addition to the microprocessor 128, other parts of the mobile communication device 100 are shown schematically in FIG. 1. These may include a communications subsystem 102, a short-range communications subsystem 104, the keyboard 124 and the display 126. The mobile communication device 100 may further include other input/output devices, such as a set of auxiliary I/O devices 106, a serial port 108, a speaker 111 and a microphone 112. The mobile communication device 100 may further include memory devices including a flash memory 116 and a Random Access Memory (RAM) 118 and various other device subsystems 120. The mobile communication device 100 may comprise a two-way radio frequency (RF) communication device having voice and data communication capabilities. In addition, the mobile communication device 100 may have the capability to communicate with other computer systems via the Internet.

Operating system software executed by the microprocessor 128 may be stored in a computer readable medium, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device may also be stored to the RAM 118.

The microprocessor 128, in addition to its operating system functions, enables execution of software applications on the mobile communication device 100. A predetermined set of software applications that control basic device operations, such as a voice communications module 130A and a data communications module 130B, may be installed on the mobile communication device 100 during manufacture. A line-specific user interface module 130C may also be installed on the mobile communication device 100 during manufacture, to implement aspects of the present disclosure. As well, additional software modules, illustrated as another software module 130N, which may be, for instance, a PIM application, may be installed during manufacture. The PIM application may be capable of organizing and managing data items, such as e-mail messages, calendar events, voice mail messages, appointments and task items. The PIM application may also be capable of sending and receiving data items via a wireless carrier network 170 represented by a radio tower. The data items managed by the PIM application may be seamlessly integrated, synchronized and updated via the wireless carrier network 170 with the device user's corresponding data items stored or associated with a host computer system.

Communication functions, including data and voice communications, are performed through the communication subsystem 102 and, possibly, through the short-range communications subsystem 104. The communication subsystem 102 includes a receiver 150, a transmitter 152 and one or more antennas, illustrated as a receive antenna 154 and a transmit antenna 156. In addition, the communication subsystem 102 also includes a processing module, such as a digital signal processor (DSP) 158, and local oscillators (LOs) 160. The specific design and implementation of the communication subsystem 102 is dependent upon the communication network in which the mobile communication device 100 is intended to operate. For example, the communication subsystem 102 of the mobile communication device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), High Speed Packet Access (HSPA), etc. Other types of data and voice networks, both separate and integrated, may also be utilized with the mobile communication device 100.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in Mobitex™ networks, mobile devices are registered on the network using a Mobitex Access Number (MAN) associated with each device and in DataTAC™ networks, mobile devices are registered on the network using a Logical Link Identifier (LLI) associated with each device. In GPRS networks, however, network access is associated with a subscriber or user of a device. A GPRS device therefore uses a subscriber identity module, commonly referred to as a Subscriber Identity Module (SIM) card, in order to operate on a GPRS network. Despite identifying a subscriber by SIM, mobile devices within GSM/GPRS networks are uniquely identified using an International Mobile Equipment Identity (IMEI) number.

When required network registration or activation procedures have been completed, the mobile communication device 100 may send and receive communication signals over the wireless carrier network 170. Signals received from the wireless carrier network 170 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the wireless carrier network 170 are processed (e.g., modulated and encoded) by the DSP 158 and are then provided to the transmitter 152 for digital to analog conversion, frequency up conversion, filtering, amplification and transmission to the wireless carrier network 170 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 102 and is input to the microprocessor 128. The received signal is then further processed by the microprocessor 128 for output to the display 126, or alternatively to some auxiliary I/O devices 106. A device user may also compose data items, such as e-mail messages, using the keyboard 124 and/or some other auxiliary I/O device 106, such as a touchpad, a rocker switch, a thumb-wheel, a trackball, a touchscreen, or some other type of input device. The composed data items may then be transmitted over the wireless carrier network 170 via the communication subsystem 102.

In a voice communication mode, overall operation of the device is substantially similar to the data communication mode, except that received signals are output to the speaker 111, and signals for transmission are generated by a microphone 112. Alternative voice or audio I/O subsystems, such as a voice message recording subsystem, may also be implemented on the mobile communication device 100. In addition, the display 126 may also be utilized in voice communication mode, for example, to display the identity of a calling party, the duration of a voice call, or other voice call related information.

The short-range communications subsystem 104 enables communication between the mobile communication device 100 and other proximate systems or devices, which need not necessarily be similar devices. For example, the short-range communications subsystem may include an infrared device and associated circuits and components, or a Bluetooth™ communication module to provide for communication with similarly-enabled systems and devices.

In the presently described embodiment, the voice communications module 130A is configured with at least a first line and a second line for transmitting and receiving phone calls. Accordingly, the mobile communication device 100 will have at least a first telephone directory number and a second telephone directory number corresponding to the first line and to the second line, respectively. For example, a user may employ the first line and corresponding first telephone directory number for work use and may employ the second line and corresponding second telephone directory number for personal use.

The mobile communication device 100 may include, among the other modules 130N, a line selection module for selecting which line should be used by the voice communications module 130A. The line selection module selects the line to be used by the voice communications module 130A based upon line selection information stored on the device 10 for example, a record of which line is a default line, that is, the line to be used in the absence of instructions to use a particular line. When the user initiates a phone call, the microprocessor 128, under program control, determines, using the line selection module, the selected line and passes an indication of the selected line to the voice communications module 130A. It should be noted that the line selection module may be implemented as a component or function of the voice communications module 130A. The line selection module may also be implemented as part of another of the other modules 130N, for example, as part of a PIM module.

According to one implementation, when a user makes a phone call, the line selection module selects the default line. This default line may be preestablished by the user, for example, through use of a user interface screen. The default line may be the first line, the second line or any other line.

The line that is used for an outgoing call to a particular target recipient may be recorded by the microprocessor 128 in association with that target recipient so that the next time a call is made to that target recipient, the line selection module selects the recorded line. It should be noted that the term "target recipient" is used herein representative of a phone number, a person, a company or the like to whom/which the outgoing call is made. The term "target recipient" may also be taken to mean one or more persons, companies or the like.

Target recipients stored as entries in the address book of the PIM module may be specifically associated with a particular line. When the user places a call to a particular target recipient, the line selection module selects the line associated with that particular target recipient in the PIM module.

For an outgoing call, the line selection module may select the one of the lines that is designated as the "active" line. The active line may be the default line or, where the user has instructed the microprocessor 128 to consider a particular line to be the active line, the particular line designated active. At any time, the user of the mobile communication device 100 may use the user interface of the device to designate one of the lines as the active line.

Even though initiation of an outgoing call occurs on the active line, the mobile communication device 100 may receive a call on one of any of the lines associated with the mobile communication device 100.

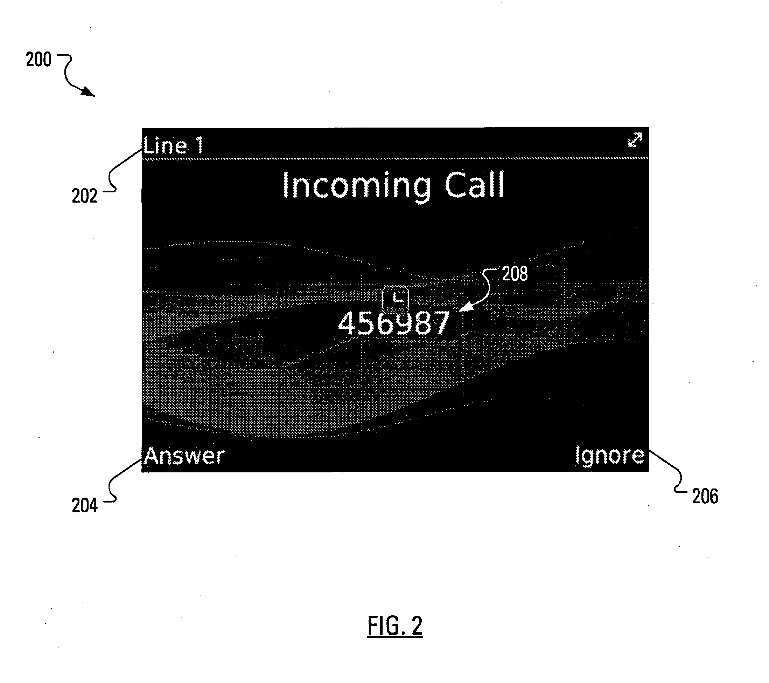

FIG. 2 illustrates an example incoming call (line 1) screen 200 to be shown on the display 126 while the voice communication module 130A is causing the mobile communication device 100 to alert the user to an incoming call on the first line. Information conveyed by the example incoming call (line 1) screen 200 includes: a line indication 202; an Answer command indication 204; an Ignore command indication 206; and a Calling Line Identification 208. The line indication 202 indicates the line on which the incoming call is being received, in this case, line 1. The Answer command indication 204 may be associated with a key (often referred to as a "hot" key) on the keyboard 124 that is closest to the bottom left corner of the display 126 so that receipt, by the microprocessor 128, of an indication of a keypress event on that key causes the microprocessor 128 and the voice communication module 130A to complete the connection requested by the incoming call. Alternatively, where the display 126 is a touchscreen display, to answer the incoming call and complete the requested connection, the user may merely need to touch the display in the general area of the Answer command indication 204. Similarly, an action by the microprocessor 128 may be triggered by user actuation of a hot key associated with the Ignore command indication 206 or by receipt of an indication that a touch of the display 126 has occurred at or near the Ignore command indication 206.

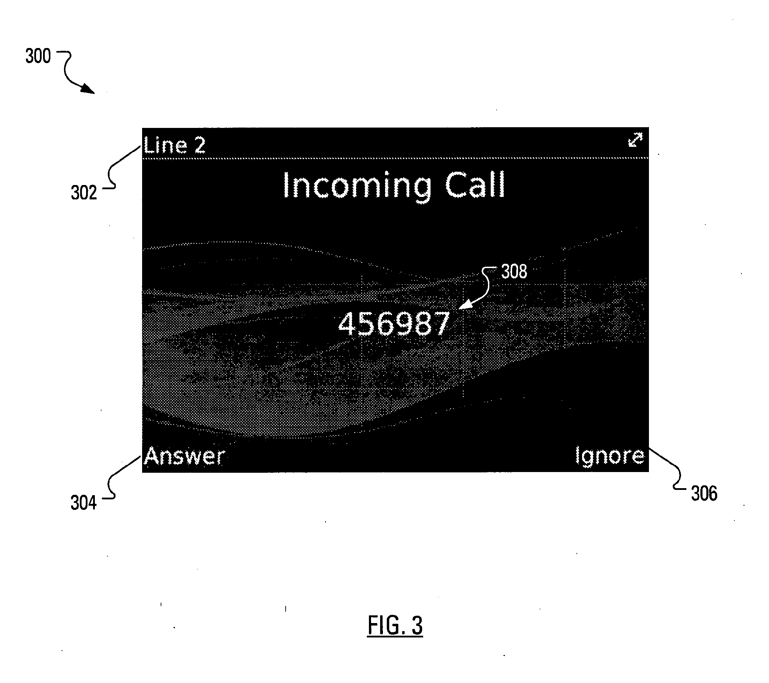

FIG. 3 illustrates an example incoming call (line 2) screen 300 to be shown on the display 126 while the voice communication module 130A is causing the mobile communication device 100 to alert the user to an incoming call on the first line. Information conveyed by the example incoming call (line 2) screen 300 includes: a line indication 302; an Answer command indication 304; an Ignore command indication 306; and a Calling Line Identification 308. The line indication 302 indicates the line on which the incoming call is being received, in this case, line 2. The Answer command indication 304 may be associated with a hot key so that receipt, by the microprocessor 128, of an indication of a keypress event on the hot key causes the microprocessor 128 and the voice communication module 130A to complete the connection requested by the incoming call. Alternatively, where the display 126 is a touchscreen display, to answer the incoming call and complete the requested connection, the user may merely need to touch the display in the general area of the Answer command indication 304. Similarly, an action by the microprocessor 128 may be triggered by user actuation of a hot key associated with the Ignore command indication 306 or by receipt of an indication that a touch of the display 126 has occurred at or near the Ignore command indication 306.

Notably, the difference between the example incoming call (line 1) screen 200 and the example incoming call (line 2) screen 300 is very slight. Indeed, the only difference found is that, in the line indication 202, the example incoming call (line 1) screen 200 indicates "Line 1" and the line indication 302 in the example incoming call (line 2) screen 300 indicates "Line 2".

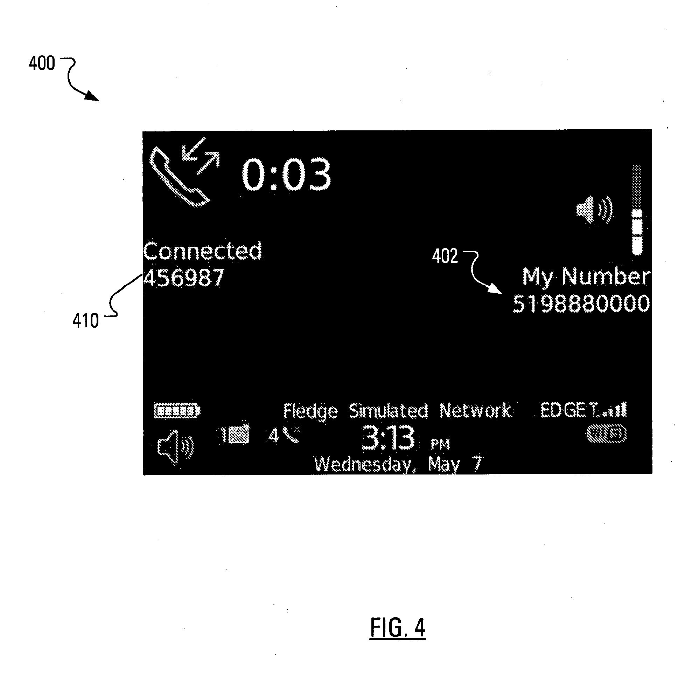

Even when a connection has been established on a line of a multiple-line telephone terminal device, the screen shown on the display 126 may not indicate the line in use in an obvious manner. For example, see FIG. 4, which illustrates an example active call (line 1) screen 400. Information conveyed by the example active call (line 1) screen 400 includes: a line indication 402; and a Connected Line Identification 410. The line indication 402 includes the text "My Number" and example directory number 5198880000.

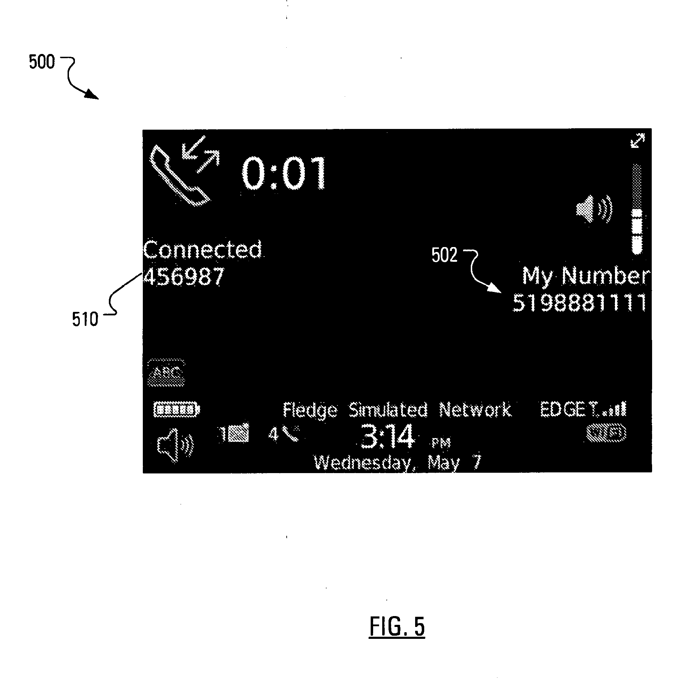

For a further example, see FIG. 5, which illustrates an example active call (line 2) screen 500. Information conveyed by the example active call (line 2) screen 500 includes: a line indication 502; and a Connected Line Identification 510. The line indication 502 includes the text "My Number" and example directory number 5198881111.

Notably, the difference between the example active call (line 1) screen 400 and the example active call (line 2) screen 500 is very slight. Indeed, the only difference found is that, in the line indication 402, the example active call (line 1) screen 200 indicates "5198880000" and the line indication 502 in the example active call (line 2) screen 500 indicates "5198881111".

For multiple-line telephone terminal devices, user interface screens related to incoming calls and active calls typically only provide a subtle indication of which line, among the multiple lines available to the multiple-line mobile communication device 100, that is currently being used. It may be considered difficult for the average user to see or read the line indication.

In overview, by providing a distinct, line-specific background for the incoming call screen and the active call screen, a user may be allowed to more readily determine which line, of the multiple lines available to the multiple-line mobile communication device 100, is currently being employed.

More particularly, a line-specific background may be a colour, provided that the display 126 is a colour display. Additionally, a line-specific background may be a pattern. Furthermore, the line-specific background may be an image, where the image may be grey-scale or colour.

In one embodiment, a user may establish a line-specific background for each of the multiple lines available to the multiple-line mobile communication device 100 through the use of a user-interface screen related to setting user preferences.

Additionally, the multiple-line mobile communication device 100 may be pre-loaded with "themes" that define fonts, screen layout, home screen background images. Such themes may be adapted to also specify line-specific backgrounds. In addition to being pre-loaded, such themes may also be made available for download from network-connected storage.

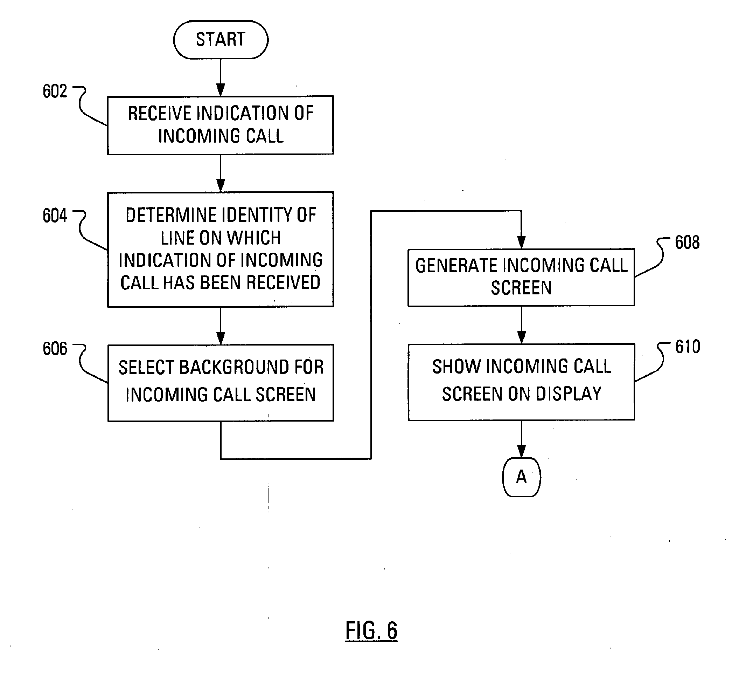

In operation, and in view of FIG. 6, the multiple-line mobile communication device 100 receives (step 602) an indication of incoming call on a first line (Line 1, 519-888-0000). Responsive to the receipt of the indication, the microprocessor 128 determines (step 604) an identity for the line on which the indication of the incoming call has been received. Based on the line on which the indication of the incoming call has been received, the microprocessor 128 selects (step 606) a background for the incoming call screen. The microprocessor 128 then generates (step 608) an incoming call screen, while incorporating the background selected in step 606. Once the incoming call screen has been generated, the microprocessor 128 controls the display 126 to show (step 610) the incoming call screen.

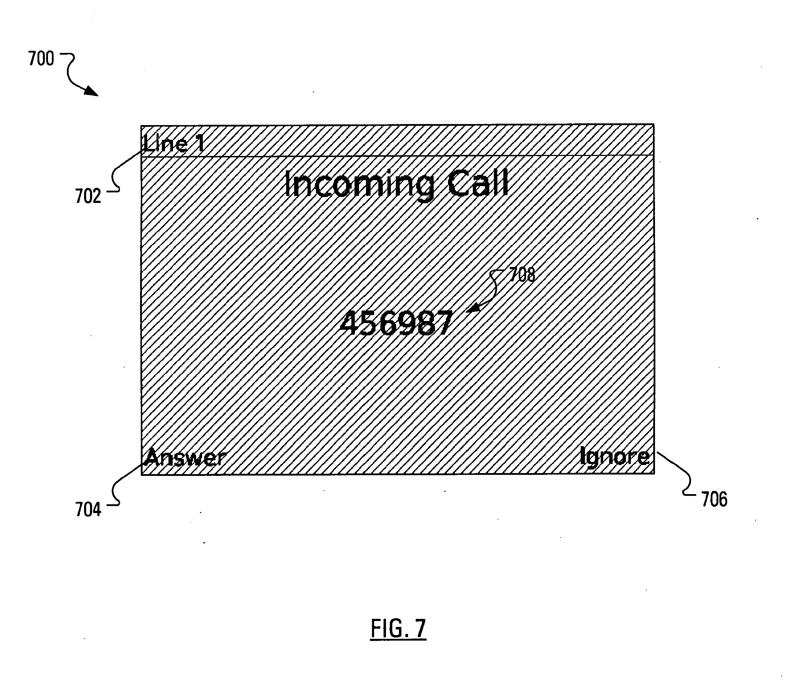

FIG. 7 illustrates an example backgrounded incoming call (line 1) screen 700. The example backgrounded incoming call (line 1) screen 700 has a patterned background made up of a collection of parallel diagonal lines. Information conveyed by the example backgrounded incoming call (line 1) screen 700 includes: a line indication 702; an Answer command indication 704; an Ignore command indication 706; and a Calling Line Identification 708.

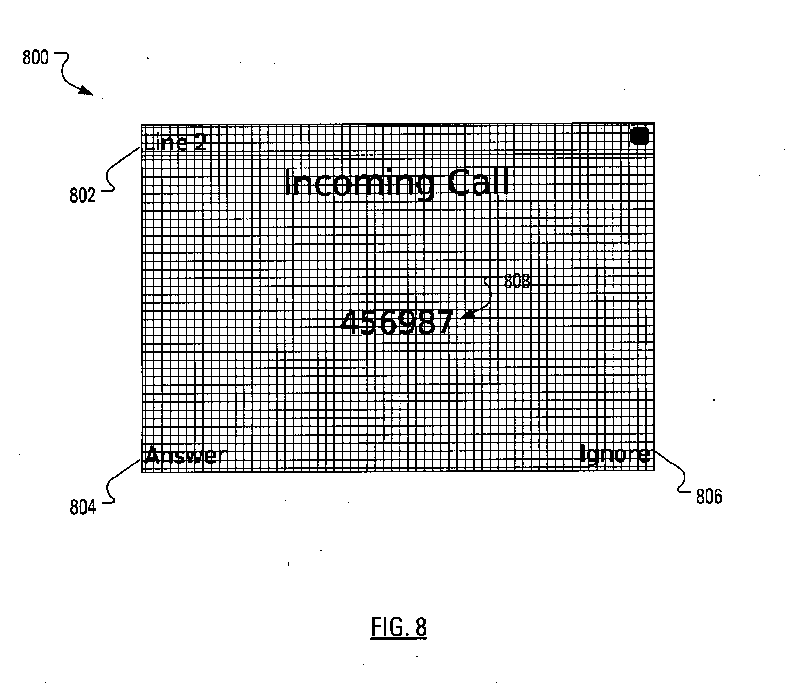

FIG. 8 illustrates an example backgrounded incoming call (line 2) screen 800. The example backgrounded incoming call (line 2) screen 800 has a patterned background made up of a collection of parallel vertical lines cross hatched with a collection of parallel horizontal lines. Information conveyed by the example backgrounded incoming call (line 2) screen 800 includes: a line indication 802; an Answer command indication 804; an Ignore command indication 806; and a Calling Line Identification 808.

Notably, the difference between the example backgrounded incoming call (line 1) screen 700 and the example backgrounded incoming call (line 2) screen 800 is significant and readily recognizable. Indeed, a mere glance at the display 126 conveys whether the incoming call is arriving on line 1 (diagonal lines) or line 2 (cross hatched lines).

Responsive to viewing one of the backgrounded incoming call screens 700, 800, the user may provide input to the multiple-line mobile communication device 100.

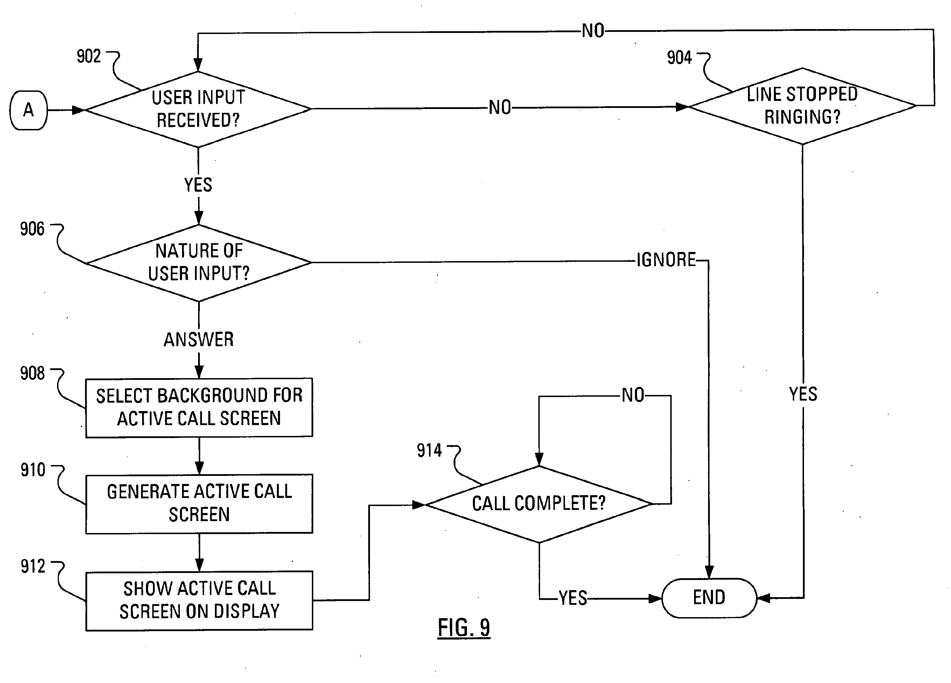

As shown in FIG. 9, which illustrates steps in an example method of indicating which of multiple lines is in use for an active call, the microprocessor 128 determines (step 902) whether user input has been received. If no user input has been received, the microprocessor 128 determines (step 904) whether ringing on the line has discontinued. If the microprocessor 128 determines that ringing on the line has discontinued, the method is complete as it may be assumed that the originator of the call has hung up. If the microprocessor 128 determines that ringing on the line is ongoing, the microprocessor 128 may again determine (step 902) whether user input has been received.

Upon determining that user input has been received, the microprocessor 128 determines (step 906) the nature of the input. According to the example backgrounded incoming call (line 1) screen 700 the nature of the input can be either Answer or Ignore. It should be clear that many other possibilities exist and that the possibilities illustrated in FIG. 7 have been used for simplicity of illustration. Where the microprocessor 128 determines (step 906) that the nature of the input is "Ignore", the method is complete.

However, where the microprocessor 128 determines (step 906) that the nature of the input is "Answer", it is expected that the voice communication module 130A will take steps to complete the connection requested by the incoming call. Simultaneously, the microprocessor 128 selects (step 908), based on the line on which the indication of the incoming call has been received (determined in step 604, FIG. 6), a background for an active call screen. The microprocessor 128 then generates (step 910) an active call screen, while incorporating the background selected in step 908. Once the active call screen has been generated, the microprocessor 128 controls the display 126 to show (step 912) the active call screen.

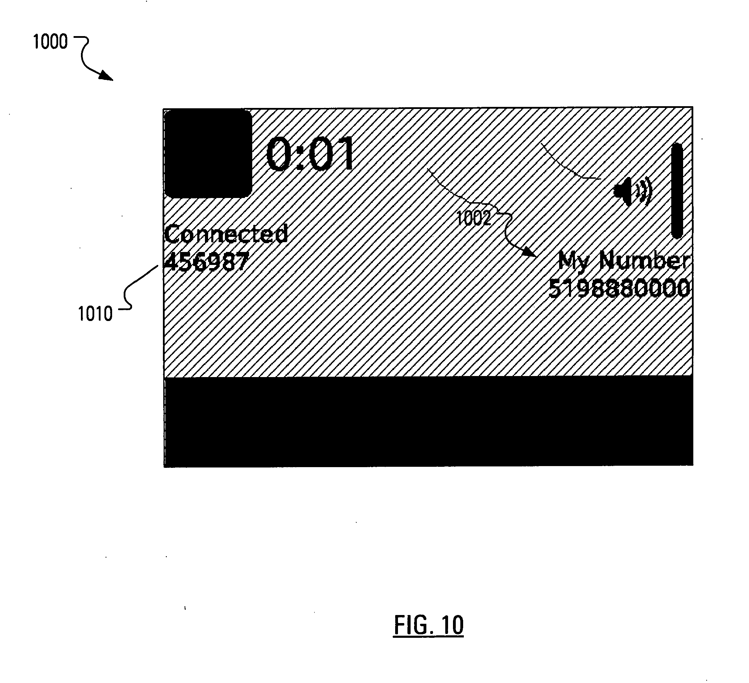

FIG. 10 illustrates an example backgrounded active call (line 1) screen 1000. Consistent with the example backgrounded incoming call (line 1) screen 700 (FIG. 7), the example backgrounded active call (line 1) screen 1000 has a patterned background made up of a collection of parallel diagonal lines. Information conveyed by the example backgrounded active call (line 1) screen 1000 includes: a line indication 1002; and a Connected Line Identification 1010. The line indication 1002 includes the text "My Number" and example directory number 5198880000.

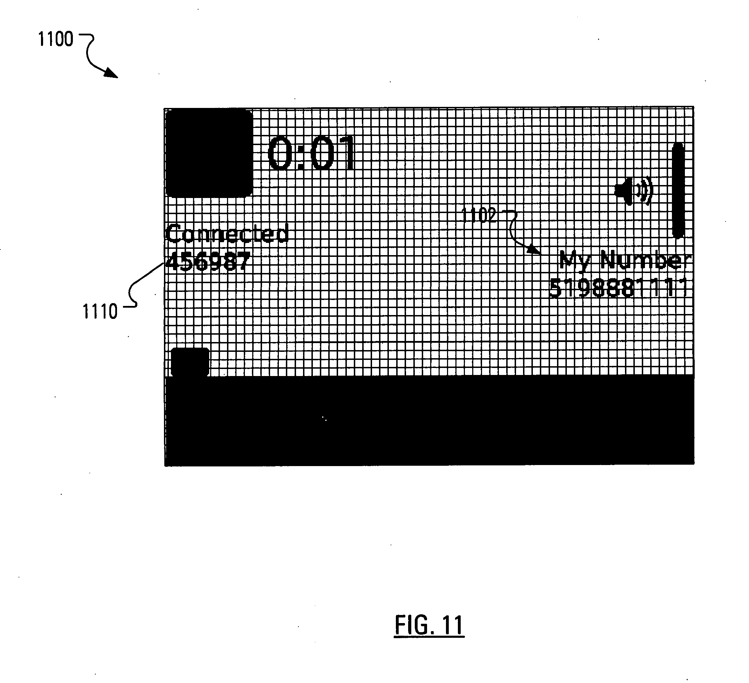

FIG. 11 illustrates an example backgrounded active call (line 2) screen 1100. Consistent with the example backgrounded incoming call (line 2) screen 800, the example backgrounded active call (line 2) screen 1100 has a patterned background made up of a collection of parallel vertical lines cross hatched with a collection of parallel horizontal lines. Information conveyed by the example backgrounded active call (line 2) screen 1100 includes: a line indication 1102; and a Connected Line Identification 1110. The line indication 1102 includes the text "My Number" and example directory number 5198881111.

Subsequently, the microprocessor 128 determines (step 914) whether the call has been completed. Where the microprocessor 128 determines (step 914) that the call is ongoing, the microprocessor 128 maintains the active call screen, while updating certain aspects of the active call screen, such as duration of call and signal strength.

As will be clear to a person of ordinary skill in the art, rather than patterns (e.g., diagonal for line 1 and cross hatched for line 2) distinguishing line 1 from line 2, colors (e.g., blue for line 1 and red for line 2) may be used. Furthermore, images (e.g., house for line 1 and office tower for line 2) may be used to distinguish line 1 from line 2.

Advantageously, instead of text, graphical backgrounds may be considered to facilitate identification of the in-use line.

The above-described embodiments of the present application are intended to be examples only. Alterations, modifications and variations may be effected to the particular embodiments by those skilled in the art without departing from the scope of the application, which is defined by the claims appended hereto.

## Claims

1. A method of indicating an in-use line in a telephone terminal device (100) capable of communicating on a plurality of lines, the method comprising:
receiving an indication of an incoming call on a first line;
determining an identity of the first line;
selecting, based on the identity of the first line, a background for an incoming call screen;
generating, using the background, the incoming call screen such that the incoming call screen is specific to the first line; and
showing the incoming call screen specific to the first line on a display of the telephone terminal device;
upon determining that user input has been received for answering the incoming call:
selecting the background for an active call screen;
generating, using the background, the active call screen such that the active call screen is specific to the first line; and
showing the active call screen specific to the first line on a display of the telephone terminal device until completion of the call.

2. The method of claim 1 wherein the background comprises a color.

3. The method of claim 1 wherein the background comprises a pattern.

4. The method of claim 1 wherein the background comprises an image.

5. A telephone terminal device (100) comprising:
a processor (128) adapted to:
receive an indication of an incoming call on a first line;
determine an identity of the first line;
select, based on the identity of the first line, a background for an incoming call screen;
generate, using the background, the incoming call screen such that the incoming call screen is specific to the first line;
show the incoming call screen specific to the first line on a display of the telephone terminal device;
upon determining that user input has been received for answering the incoming call:
select the background for an active call screen;
generate, using the background, the active call screen such that the active call screen is specific to the first line; and
show the active call screen specific to the first line on a display of the telephone terminal device until completion of the call.

6. A computer-readable medium (116, 118) containing computer-executable instructions that, when performed by a processor (128) in a telephone terminal device (100), cause the processor to:
receive an indication of an incoming call on a first line;
determine an identity of the first line;
select, based on the identity of the first line, a background for an incoming call screen;
generate, using the background, the incoming call screen such that the incoming call screen is specific to the first line; and
show the incoming call screen specific to the first line on a display of the telephone terminal device;
upon determining that user input has been received for answering the incoming call:
select the background for an active call screen;
generate, using the background, the active call screen such that the active call screen is specific to the first line; and
show the active call screen specific to the first line on a display of the telephone terminal device until completion of the call.

## Patentansprüche

1. Verfahren zum Anzeigen einer Leitung "in Benutzung" in einer Telefonendgerätvorrichtung (100), die auf einer Vielzahl von Leitungen kommunizieren kann, wobei das Verfahren aufweist:
Empfangen einer Anzeige eines ankommenden Anrufs auf einer ersten Leitung;
Bestimmen einer Identität der ersten Leitung;
Auswählen, basierend auf der Identität der ersten Leitung, eines Hintergrunds für einen "ankommender Anruf"-Bildschirm;
Erzeugen, unter Verwendung des Hintergrunds, des "ankommender Anruf"-Bildschirms derart, dass der "ankommender Anruf"-Bildschirm für die erste Leitung spezifisch ist; und
Anzeigen des "ankommender Anruf"-Bildschirms, der für die erste Leitung spezifisch ist, auf einer Anzeige der Telefonendgerätvorrichtung;
bei einem Bestimmen, dass eine Benutzereingabe empfangen wurde zum Annehmen des ankommenden Anrufs:
Auswählen des Hintergrunds für einen "aktiver Anruf"-Bildschirm;
Erzeugen, unter Verwendung des Hintergrunds, des "aktiver Anruf"-Bildschirms derart, dass der "aktiver Anruf"-Bildschirm für die erste
Leitung spezifisch ist; und
Anzeigen des "aktiver Anruf"-Bildschirms, der für die erste Leitung spezifisch ist, auf einer Anzeige der Telefonendgerätvorrichtung, bis der Anruf beendet ist.

2. Verfahren gemäß Anspruch 1, wobei der Hintergrund eine Farbe aufweist.

3. Verfahren gemäß Anspruch 1, wobei der Hintergrund ein Muster aufweist.

4. Verfahren gemäß Anspruch 1, wobei der Hintergrund ein Bild aufweist.

5. Telefonendgerätvorrichtung (100), die aufweist:
einen Prozessor (128), der ausgebildet ist zum:
Empfangen einer Anzeige eines ankommenden Anrufs auf einer ersten Leitung;
Bestimmen einer Identität der ersten Leitung;
Auswählen, basierend auf der Identität der ersten Leitung, eines Hintergrunds für einen "ankommender Anruf"-Bildschirm;
Erzeugen, unter Verwendung des Hintergrunds, des "ankommender Anruf"-Bildschirms derart, dass der "ankommender Anruf"-Bildschirm für die erste Leitung spezifisch ist;
Anzeigen des "ankommender Anruf"-Bildschirms, der für die erste Leitung spezifisch ist, auf einer Anzeige der Telefonendgerätvorrichtung;
bei einem Bestimmen, dass eine Benutzereingabe empfangen wurde zum Annehmen des ankommenden Anrufs:
Auswählen des Hintergrunds für einen "aktiver Anruf"-Bildschirm;
Erzeugen, unter Verwendung des Hintergrunds, des "aktiver Anruf"-Bildschirms derart, dass der "aktiver Anruf"-Bildschirm für die erste
Leitung spezifisch ist; und
Anzeigen des "aktiver Anruf"-Bildschirms, der für die erste Leitung spezifisch ist, auf einer Anzeige der Telefonendgerätvorrichtung, bis der Anruf beendet ist.

6. Computerlesbares Medium (116, 118), das computerausführbare Anweisungen enthält, die bei Durchführung durch einen Prozessor (128) in einer Telefonendgerätvorrichtung (100) den Prozessor (128) veranlassen zum:
Empfangen einer Anzeige eines ankommenden Anrufs auf einer ersten Leitung;
Bestimmen einer Identität der ersten Leitung;
Auswählen, basierend auf der Identität der ersten Leitung, eines Hintergrunds für einen "ankommender Anruf"-Bildschirm;
Erzeugen, unter Verwendung des Hintergrunds, des "ankommender Anruf"-Bildschirms derart, dass der "ankommender Anruf"-Bildschirm für die erste Leitung spezifisch ist; und
Anzeigen des "ankommender Anruf"-Bildschirms, der für die erste Leitung spezifisch ist, auf einer Anzeige der Telefonendgerätvorrichtung;
bei einem Bestimmen, dass eine Benutzereingabe empfangen wurde zum Annehmen des ankommenden Anrufs:
Auswählen des Hintergrunds für einen "aktiver Anruf"-Bildschirm;
Erzeugen, unter Verwendung des Hintergrunds, des "aktiver Anruf"-Bildschirms derart, dass der "aktiver Anruf"-Bildschirm für die erste
Leitung spezifisch ist; und
Anzeigen des "aktiver Anruf"-Bildschirms, der für die erste Leitung spezifisch ist, auf einer Anzeige der Telefonendgerätvorrichtung, bis der Anruf beendet ist.

## Revendications

1. Procédé permettant d'indiquer qu'une ligne est en cours d'utilisation dans un dispositif de terminal téléphonique (100) conçu pour communiquer sur plusieurs lignes, le procédé comprenant le fait :
de recevoir une indication d'un appel entrant sur une première ligne ;
de déterminer une identité de la première ligne ;
de sélectionner, sur la base de l'identité de la première ligne, un fond d'écran pour un écran d'appel entrant ;
de générer, en utilisant le fond d'écran, l'écran d'appel entrant de sorte que l'écran d'appel entrant soit spécifique à la première ligne ; et
de montrer l'écran d'appel entrant spécifique à la première ligne sur un dispositif d'affichage du dispositif de terminal téléphonique ;
lors de la détermination qu'une entrée d'utilisateur a été reçue pour répondre à l'appel entrant :
de sélectionner le fond d'écran pour un écran d'appel actif ;
de générer, en utilisant le fond d'écran, l'écran d'appel actif de sorte que l'écran d'appel actif soit spécifique à la première ligne ; et
de montrer l'écran d'appel actif spécifique à la première ligne sur un dispositif d'affichage du dispositif de terminal téléphonique jusqu'à ce que l'appel prenne fin.

2. Procédé de la revendication 1, dans lequel le fond d'écran comprend une couleur.

3. Procédé de la revendication 1, dans lequel le fond d'écran comprend un motif.

4. Procédé de la revendication 1, dans lequel le fond d'écran comprend une image.

5. Dispositif de terminal téléphonique (100) comprenant :
un processeur (128) conçu pour :
recevoir une indication d'un appel entrant sur une première ligne ;
déterminer une identité de la première ligne ;
sélectionner, sur la base de l'identité de la première ligne, un fond d'écran pour un écran d'appel entrant ;
générer, en utilisant le fond d'écran, l'écran d'appel entrant de sorte que l'écran d'appel entrant soit spécifique à la première ligne ;
montrer l'écran d'appel entrant spécifique à la première ligne sur un dispositif d'affichage du dispositif de terminal téléphonique ;
lors de la détermination qu'une entrée d'utilisateur a été reçue pour répondre à l'appel entrant :
sélectionner le fond d'écran pour un écran d'appel actif ;
générer, en utilisant le fond d'écran, l'écran d'appel actif de sorte que l'écran d'appel actif
soit spécifique à la première ligne ; et
montrer l'écran d'appel actif spécifique à la première ligne sur un dispositif d'affichage du dispositif de terminal téléphonique jusqu'à ce que l'appel prenne fin.

6. Support lisible par ordinateur (116, 118) contenant des instructions exécutables par ordinateur qui, lorsqu'elles sont exécutées par un processeur (128) dans un dispositif de terminal téléphonique (100), amènent le processeur :
à recevoir une indication d'un appel entrant sur une première ligne ;
à déterminer une identité de la première ligne ;
à sélectionner, sur la base de l'identité de la première ligne, un fond d'écran pour un écran d'appel entrant ;
à générer, en utilisant le fond d'écran, l'écran d'appel entrant de sorte que l'écran d'appel entrant soit spécifique à la première ligne ; et
à montrer l'écran d'appel entrant spécifique à la première ligne sur un dispositif d'affichage du dispositif de terminal téléphonique ;
lors de la détermination qu'une entrée d'utilisateur a été reçue pour répondre à l'appel entrant :
à sélectionner le fond d'écran d'un écran d'appel actif ;
à générer, en utilisant le fond d'écran, l'écran d'appel actif, de sorte que l'écran d'appel actif soit spécifique à la première ligne ; et
à montrer l'écran d'appel actif spécifique à la première ligne sur un dispositif d'affichage du dispositif de terminal téléphonique jusqu'à ce que l'appel prenne fin.
